# EUROPEAN PATENT APPLICATION

(11) **EP 4 668 353 A1**
(43) Date of publication of application: **24.12.2025**
(21) Application number: 25182204.5
(22) Date of filing: 12.06.2025
(51) Int. Cl.: H01M 4/13, H01M 4/36, H01M 4/62, H01M 4/66, H01M 10/0587, H01M 50/107, H01M 50/474, H01M 10/0562, H01M 4/38, H01M 10/052

(54) **ELECTRODE ASSEMBLY AND CYLINDRICAL ALL-SOLID-STATE BATTERY INCLUDING THE SAME**

(30) Priority: 21.06.2024 KR 20240080879
(71) Applicant: SAMSUNG SDI CO., LTD., Yongin-si, Gyeonggi-do 17084 (KR)
(72) Inventor: Choi, Jinkyu, 17084 Yongin-si, Gyeonggi-do (KR); Lee, Won Gi, 17084 Yongin-si, Gyeonggi-do (KR)
(74) Representative: Michalski Hüttermann & Partner Patentanwälte mbB

(57) **Abstract**

Cylindrically wound electrode assemblies and all-solid-state batteries including the electrode assembly are provided. The cylindrically wound electrode assembly includes a first solid electrolyte layer, a positive electrode layer, a second solid electrolyte layer, and a negative electrode layer. The first solid electrolyte layer, the positive electrode layer, the second solid electrolyte layer, and the negative electrode layer are sequentially arranged along a radial direction of the electrode assembly. The negative electrode layer includes a negative electrode substrate, and a first negative electrode coating layer between the negative electrode substrate and the second solid electrolyte layer. The negative electrode substrate includes a negative electrode support layer, a first negative electrode metal layer on a first surface of the negative electrode support layer, and a second negative electrode metal layer on a second surface of the negative electrode support layer. The negative electrode support layer includes a resilient polymer film.

## Description

### CROSS-REFERENCE TO RELATED APPLICATION

The present application claims priority to and the benefit of Korean Patent Application No. 10-2024-0080879, filed on June 21, 2024, in the Korean Intellectual Property Office.

### BACKGROUND

### 1. Field

One or more embodiments of the present disclosure relate to an all-solid-state battery, for example, relate to a cylindrically wound electrode assembly and a cylindrical all-solid-state battery including the cylindrically wound electrode assembly.

### 2. Description of the Related Art

High-energy-density and high-safety batteries have been the focus of extensive research and development due to industrial demands. Lithium ion batteries, for instance, have been commercialized for use in information and communication devices, as well as in the automotive industry. In the automotive industry, safety is of paramount importance due to its direct impact on human well-being.

All-solid-state batteries, which do not utilize flammable organic dispersion mediums, significantly reduce the risk of fire or explosion even in the event of a short-circuit. Therefore, these batteries offer enhanced stability and have attached considerable attention.

### SUMMARY

One or more aspects of embodiments of the present disclosure are directed toward a wound electrode assembly capable of being accommodated in a cylindrical casing.

One or more aspects of embodiments of the present disclosure are directed toward a cylindrical all-solid-state battery including the wound electrode assembly.

Additional aspects will be set forth in part in the description which follows and, in part, will be apparent from the description, or may be learned by practice of the presented embodiments of the disclosure.

According to one or more embodiments of the present disclosure, a cylindrically wound electrode assembly may include: a first solid electrolyte layer, a positive electrode layer, a second solid electrolyte layer, and a negative electrode layer. The first solid electrolyte layer, the positive electrode layer, the second solid electrolyte layer, and the negative electrode layer may be sequentially arranged along a radial direction of the cylindrically wound electrode assembly. The negative electrode layer may include: a negative electrode substrate; and a first negative electrode coating layer between the negative electrode substrate and the second solid electrolyte layer. The negative electrode substrate may include: a negative electrode support layer; a first negative electrode metal layer on a first surface of the negative electrode support layer; and a second negative electrode metal layer on a second surface of the negative electrode support layer. The negative electrode support layer may include a resilient polymer film.

According to one or more embodiments of the present disclosure, a cylindrical all-solid-state battery may include: a cylindrically wound electrode assembly; a cylindrical casing that accommodates the cylindrically wound electrode assembly; and a cap assembly that closes an opened upper portion of the cylindrical casing. The cylindrically wound electrode assembly may include: a positive electrode layer; a negative electrode layer; and a solid electrolyte layer between the positive electrode layer and the negative electrode layer. At least one selected from among the positive electrode layer and the negative electrode layer may include a composite substrate. The composite substrate may include: a support layer; and a metal layer on a surface of the support layer. The support layer may include a resilient polymer film.

### BRIEF DESCRIPTION OF DRAWINGS

The accompanying drawings are included to provide a further understanding of the present disclosure, and are incorporated in and constitute a part of this disclosure. The drawings illustrate example embodiments of the disclosure and, together with the description, serve to explain principles of the disclosure. The above and other aspects, features, and advantages of certain embodiments of the present disclosure will be more apparent from the following description taken in conjunction with the accompanying drawings.
FIG. 1 illustrates a cross-sectional view showing an all-solid-state battery according to one or more embodiments of the present disclosure.
FIG. 2 illustrates a cross-sectional view showing an all-solid-state battery according to one or more embodiments of the present disclosure.
FIG. 3 illustrates a plan view showing a cylindrical all-solid-state battery according to one or more embodiments of the present disclosure.
FIG. 4 illustrates a cross-sectional view of the cylindrical all-solid-state battery taken along the line A-A' of FIG. 3.
FIGS. 5 to 9 illustrate diagrams showing a method of fabricating an all-solid-state battery according to one or more embodiments of the present disclosure.
FIG. 10 illustrates a plan view showing a cylindrical all-solid-state battery according to one or more embodiments of the present disclosure.
FIG. 11 illustrates a cross-sectional view of the cylindrical all-solid-state battery taken along the line A-A' of FIG. 10.

### DETAILED DESCRIPTION

In order to sufficiently understand the configurations and effects of the present disclosure, example embodiments of the present disclosure will be described with reference to the accompanying drawings. It should be noted, however, that the present disclosure is not limited to the following example embodiments, and is implemented in one or more suitable forms. Rather, the example embodiments are provided only to illustrate the present disclosure and let those skilled in the art fully know the scope of the present disclosure.

In this disclosure, it will be understood that, if (e.g., when) an element is referred to as being on another element, the element may be directly on the other element or intervening elements may be present therebetween. In contrast, if (e.g., when) an element is referred to as being "directly on" another element, there are no intervening elements present. In the drawings, thicknesses of some components may be exaggerated for effectively explaining the technical contents. Like reference numerals refer to like elements throughout the present disclosure, and duplicative descriptions thereof is not provided for conciseness.

One or more embodiments detailed in this description will be discussed with reference to sectional and/or plan views as illustrative views of the present disclosure. In the drawings, thicknesses of layers and regions may be exaggerated for effectively explaining the technical contents. Accordingly, regions illustrated in the drawings may have general properties, and shapes of regions illustrated in the drawings are utilized to illustratively disclose specific shapes but not limited to the scope of the present disclosure. It will be understood that, although the terms "first," "second," "third." and/or the like is utilized herein to describe various elements, these elements should not be limited by these terms. These terms are only utilized to distinguish one element from another element. The example embodiments explained and illustrated herein include complementary embodiments thereof.

The terminology utilized herein is for the purpose of describing particular example embodiments only and is not intended to limit the present disclosure. As utilized herein, the singular forms "a," "an," and "the" are intended to include the plural forms as well, unless the context clearly indicates otherwise. Further, the utilization of "may" when describing embodiments of the present disclosure refers to "one or more embodiments of the present disclosure". The terms 'comprise(s)/include(s)/have(has)' and/or 'comprising/including/having' utilized in the disclosure do not exclude the presence or addition of one or more other components.

Unless otherwise especially defined in this disclosure, a particle diameter/size may be an average particle diameter/size. In addition, a particle diameter/size indicates an average particle diameter/size (D₅₀) where a cumulative volume is about 50 volume % in a particle size distribution. The average particle diameter (D₅₀) may be measured by a method widely suited to those skilled in the art, for example, by a particle size analyzer, for example, HORIBA, LA-950 laser particle size analyzer, a transmission electron microscope (TEM), or a scanning electron microscope (SEM). In one or more embodiments, a dynamic light-scattering measurement device is utilized to perform a data analysis, the number of particles is counted for each particle size range, and then from the data, an average particle diameter/size (D₅₀) value may be obtained through a calculation. In one or more embodiments, a laser scattering method may be utilized to measure the average particle diameter/size (D₅₀). In the laser scattering method, target particles are distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter/size (D₅₀) is calculated in the 50% standard of particle diameter distribution in the measurement device. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter/size" indicates an average particle diameter, and when the particles are non-spherical, the "diameter/size" indicates a major axis length of the particle.

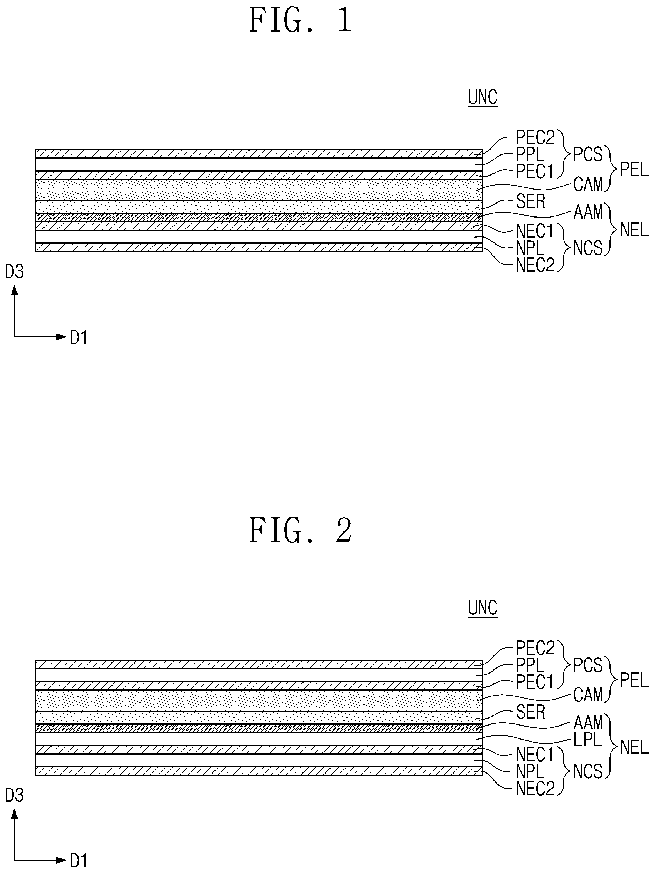

FIG. 1 illustrates a cross-sectional view showing an all-solid-state battery according to one or more embodiments of the present disclosure. FIG. 2 illustrates a cross-sectional view showing an all-solid-state battery according to one or more embodiments of the present disclosure.

Referring to FIG. 1, a unit cell UNC of an all-solid-state battery according to one or more embodiments of the present disclosure may include a positive electrode layer PEL, a negative electrode layer NEL opposite to the positive electrode layer PEL, and a solid electrolyte layer SER between the positive electrode layer PEL and the negative electrode layer NEL. The negative electrode layer NEL, the solid electrolyte layer SER, and the positive electrode layer PEL may be sequentially stacked along a vertical direction or a third direction D3 (e.g., in the stated order). In one or more embodiments, the unit cell UNC may further include an additional functional layer, such as an adhesion improvement layer, provided between the positive electrode layer PEL and the solid electrolyte layer SER and/or between the negative electrode layer NEL and the solid electrolyte layer SER.

The positive electrode layer PEL according to one or more embodiments of the present disclosure may include a positive electrode substrate PCS and a positive electrode active material layer CAM on the positive electrode substrate PCS. The positive electrode active material layer CAM may include a positive electrode active material, a solid electrolyte, a conductive material (e.g., electron conductor), and a binder.

The positive electrode substrate PCS may include a positive electrode support layer PPL, and may also include a first positive electrode metal layer PEC1 and a second positive electrode metal layer PEC2 that are correspondingly provided on opposite surfaces (e.g., on two opposite surfaces) of the positive electrode support layer PPL. For example, in one or more embodiments, the positive electrode substrate PCS may be a composite substrate. In one or more embodiments, the first positive electrode metal layer PEC1 of the positive electrode substrate PCS may be in contact with the positive electrode active material layer CAM. The second positive electrode metal layer PEC2 of the positive electrode substrate PCS may be in contact with a positive electrode active material layer of an adjacent other unit cell.

Each of the first and second positive electrode metal layers PEC1 and PEC2 may provide a reference surface on which (e.g., on one of which) the positive electrode active material layer CAM is arranged and provided. For example, in one or more embodiments, each of the first and second positive electrode metal layers PEC1 and PEC2 may include a plate or a foil including indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In one or more embodiments, the first and second positive electrode metal layers (PEC1 and PEC2) serve as reference surfaces for the positive electrode active material layer (CAM). These metal layers can be made from materials, such as indium, copper, magnesium, stainless steel, titanium, iron, cobalt, nickel, zinc, aluminum, germanium, lithium, and/or their alloys.

The positive electrode support layer PPL may include a polymer film (e.g., a resilient polymer film). In one or more embodiments, the positive electrode support layer PPL may include a resilient material (e.g., an elastic modulus in a range from about 0.1 GPa to about 1 GPa). For example, in one or more embodiments, the positive electrode support layer PPL may include a polyethylene film, a polypropylene film, a polyvinylidene chloride film, or a multi-layered film including a (e.g., any suitable) combination thereof. The positive electrode support layer PPL may have excellent or suitable ion permeability, mechanical strength, and/or elasticity (or low elastic modulus). For example, the positive electrode support layer (PPL) may exhibit excellent ion permeability, mechanical strength, and/or elasticity, and/or possess a low elastic modulus. In the present context, and unless defined otherwise, "elasticity" refers to a material's ability to return to its original shape after being deformed and "elastic modulus (or modulus of elasticity)" quantifies this property by measuring the stiffness of a material. It is the ratio of stress (force per unit area) to strain (deformation) in the elastic region of the material's stress-strain curve (e.g., a low elastic modulus indicates high elasticity). Here, a resilient polymer film refers to a polymer film that can return to its original shape after deformation and exhibits high elasticity.

In one or more embodiments, to increase adhesiveness between the positive electrode substrate PCS and the positive electrode active material layer CAM, a carbon layer having a thickness of about 0.1 micrometers (µm) to about 4 µm may further be arranged between the positive electrode substrate PCS and the positive electrode active material layer CAM.

The positive electrode active material of the positive electrode active material layer CAM may include a material that is capable of reversibly absorbing and desorbing lithium ions. The positive electrode active material may include a plurality of particles. In one or more embodiments, the positive electrode active material may include, for example, a lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, and/or vanadium oxide, but embodiments of the present disclosure are not limited thereto. The positive electrode active material may be utilized alone or in a mixture of two or more substances.

The lithium transition metal oxide may be, for example, a compound represented by one selected from among LiₐA_{1-b}B¹_{b}D¹₂ (where 0.90≤a≤1 and 0≤b≤0.5), LiₐE_{1**-**b}B¹_{b}O_{2**-**c}D¹_{c} (where 0.90≤a≤1, 0≤b≤0.5, and 0≤c≤0.05), LiE_{2-b}B¹_{b}O_{4-c}D¹_{c} (where 0≤b≤0.5 and 0≤c≤0.05), LiₐNi_{1-b-c}Co_{b}B¹_{c}D¹_{α} (where 0.90≤a≤1, 0≤b≤0.5, 0≤c≤0.05, and 0<α<2), LiₐNi_{1 -b-c}CO_{b}B¹_{c}O_{2-α}F¹_{α} (where 0.90≤a≤1, 0≤b≤0.5, 0≤c≤0.05, and 0<α<2), LiₐNi_{1-b-c}Mn_{b}B¹_{c}D¹_{α} (where 0.90≤a≤1, 0≤b≤0.5, 0≤c≤0.05, and 0<α≤2), LiₐNi_{1-b-c}Mn_{b}B¹_{c}O_{2-α}F¹_{α} (where 0.90≤a≤1, 0≤b≤0.5, 0≤c≤0.05, and 0<α<2), LiₐNi_{b}E_{c}G_{d}O₂ (where 0.90≤a≤1, 0≤b≤0.9, 0≤c≤0.5, and 0.001≤d≤0.1), LiₐNi_{b}Co_{c}Mn_{d}GₑO₂ (where 0.90≤a≤1, 0≤b≤0.9, 0≤c≤0.5, 0≤d≤0.5, and 0.001≤e≤0.1), LiₐNiG_{b}O₂ (where 0.9≤a≤1 and 0.001≤b≤0.1), LiₐCoG_{b}O₂ (where 0.90≤a≤1 and 0.001≤b≤0.1), LiₐMnG_{b}O₂(where 0.90≤a≤1 and 0.001≤b≤0.1), LiₐMn₂G_{b}O₄ (where 0.90≤a≤1 and 0.001≤b≤0.1), QO₂, QS₂, LiQS₂, V₂O₅, LiV₂O₅, LiI¹O₂, LiNiVO₄, Li_{3-f}J₂(PO₄)₃ (where 0≤f≤2), Li_{3-f}Fe₂(PO₄)₃ (where 0≤f≤2), and LiFePO₄. In the foregoing compounds, "A" may be nickel (Ni), cobalt (Co), manganese (Mn), or a (e.g., any suitable) combination thereof, "B¹" may be aluminum (Al), Ni, Co, Mn, chromium (Cr), iron (Fe), magnesium (Mg), strontium (Sr), vanadium (V), a rare-earth element, or a (e.g., any suitable) combination thereof, "D¹" may be oxygen (O), fluorine (F), sulfur (S), phosphorus (P), or a (e.g., any suitable) combination thereof, "E" may be Co, Mn, or a (e.g., any suitable) combination thereof, "F¹" may be F, S, P, or a (e.g., any suitable) combination thereof, "G" may be Al, Cr, Mn, Fe, Mg, lanthanum (La), cerium (Ce), Sr, V, or a (e.g., any suitable) combination thereof, "Q" may be titanium (Ti), molybdenum (Mo), Mn, or a (e.g., any suitable) combination thereof, "I¹" may be Cr, V, Fe, scandium (Sc), yttrium (Y), or a (e.g., any suitable) combination thereof, and "J" may be V, Cr, Mn, Co, Ni, copper (Cu), or a (e.g., any suitable) combination thereof.

In one or more embodiments, the positive electrode active material may include, for example, a lithium salt of transition metal oxide having a layered rock salt type (kind) structure selected from among lithium transition metal oxides discussed above. The term "layered rock salt type (kind) structure" may refer to a structure in which an oxygen atom layer and a metal atom layer are alternately and regularly arranged in a <111> direction of a cubic rock salt type (kind) structure, where each atom layer (e.g., each oxygen atom layer, each metal tom layer) forms a two-dimensional plane. The term "cubic rock salt type (kind) structure" may refer to a sodium chloride (NaCl) type (kind) structure, which is a type (kind) of crystal structure, and for example, has a structure in which face centered cubic lattices (FCCs) each formed of cations and anions are arranged displaced from each other by 1/2 of a ridge of a unit lattice. The lithium transition metal oxide having the layered rock salt type (kind) structure may be a ternary lithium transition metal oxide, such as LiNiₓCo_{y}Al_{z}O₂ (NCA) or LiNiₓCo_{y}Mn_{z}O₂ (NCM) (where 0<x<1, 0<y<1, 0<z<1, and x+y+z=1). If (e.g., when) the positive electrode active material includes a ternary lithium transition metal oxide having the layered rock salt type (kind) structure, the unit cell UNC may improve in energy density and thermal stability.

The compound included in the positive electrode active material and in a form of particles may be covered with a coating layer. The positive electrode active material may be utilized in a mixture of the compound and a compound to which the coating layer is added. The coating layer added to a surface of the positive electrode active material (e.g., the positive electrode active material particle) may include, for example, an oxide, a hydroxide, an oxyhydroxide, an oxycarbonate, or a hydrocarbonate (i.e., hydrogen carbonate) of a coating element discussed herein. A compound forming the coating layer may be amorphous or crystalline. The coating element included in the coating layer may include magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a (e.g., any suitable) mixture thereof. In one or more embodiments, the coating layer may include, for example, Li₂O-ZrO₂ (LZO). A method for forming the coating layer may be selected within any methods that do not adversely affect physical characteristics of the positive electrode active material. For example, in one or more embodiments, spray coating or immersion may be utilized to form the coating layer.

If (e.g., when) the positive electrode active material includes nickel (Ni), for example, a ternary lithium transition metal oxide such as NCA or NCM, a capacity of the unit cell UNC may be increased to reduce metal elution of the positive electrode active material in a charged state. As a result, the unit cell UNC may have improved cycle characteristics in a charged state. The term "cycle characteristics" may refer to properties that indicate the degree to which the unit cell UNC is degraded due to charge and discharge. A unit cell UNC with high cycle characteristics may degrade less due to charge and discharge, and a unit cell UNC with low cycle characteristics may degrade more due to charge and discharge.

The positive electrode active material may have a spherical particle shape or an oval particle shape. There is no limitation on a particle diameter/size and an amount of the positive electrode active material used.

The solid electrolyte in the positive electrode active material layer CAM may have a particle shape (e.g., in a form of particles). The solid electrolyte may be dispersed between the positive electrode active materials (e.g., between particles of the positive electrode active material). In one or more embodiments, the solid electrolyte may include a sulfide-based solid electrolyte with excellent or suitable lithium-ion conductivity characteristics. The sulfide-based solid electrolyte may include, for example, at least one selected from among Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, Z is one selected from among Ge, Zn, and Ga), Li₂S-GeS₂, Li₂S-SiS₂-Li₃PO₄, Li₂S-SiS₂-LiₚMO_{q} (where p and q are each a positive integer, M is one selected from among P, Si, Ge, B, Al, Ga, and In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2).

In one or more embodiments, the sulfide-based solid electrolyte may be an argyrodite-type (kind) compound including, for example, at least one selected from among Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). For example, in one or more embodiments, the sulfide-based solid electrolyte may be an argyrodite-type (kind) compound including at least one selected from among Li₆PS₅Cl, Li₆PS₅Br, and Li₆PS₅I.

In one or more embodiments, the sulfide-based solid electrolyte may be an argyrodite-type (kind) compound including Li₇₋ₐMₐPS_{6-c}X_{c} (where 0≤a≤2 and 0≤c≤2). In the foregoing chemical formula, X may be F, Br, Cl, or a (e.g., any suitable) combination thereof. In addition, M may be scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (TI), silicon (Si), germanium (Ge), tin (Sn), lead (Pb), arsenic (As), antimony (Sb), bismuth (Bi), or any combination thereof.

The argyrodite-type (kind) solid electrolyte may have a density of about 1.5 g/cc to about 2.0 g/cc. As the argyrodite-type (kind) solid electrolyte has a density of equal to or greater than about 1.5 g/cc, it may decrease an internal resistance of an all-solid-state battery and prevent or reduce a solid electrolyte layer from short-circuit and penetration caused by the formation of lithium dendrite. The solid electrolyte may have an elastic modulus of, for example, about 15 GPa to about 35 GPa.

The solid electrolyte in the positive electrode active material layer CAM may have an average particle diameter less than that of a solid electrolyte in the solid electrolyte layer SER which will be discussed later. For example, in one or more embodiments, an average particle diameter of the solid electrolyte in the positive electrode active material layer CAM may be equal to or less than about 90%, equal to or less than about 80%, equal to or less than about 70%, equal to or less than about 60%, equal to or less than about 50%, equal to or less than about 40%, equal to or less than about 30%, or equal to or less than about 20% of an average particle diameter of a solid electrolyte included in the solid electrolyte layer SER. The average particle diameter may be a median diameter (e.g., D₅₀) measured by a laser particle size distribution analyzer.

The positive electrode active material layer CAM may include a conductive material (e.g., electron conductor). The conductive material may have electrical conductivity without causing chemical change of the unit cell UNC to increase electrical conductivity of the positive electrode active material and the solid electrolyte. The conductive material may include a carbon-based material. In one or more embodiments, the conductive material may include, for example, one or more selected from among graphite, carbon black, acetylene black, carbon nano-fibers, and carbon nano-tubes.

In one or more embodiments, the positive electrode active material layer CAM may further include a binder. The binder may bind the positive electrode active material, the solid electrolyte, the conductive material to each other in the positive electrode active material layer CAM. The binder may include a material for improving an adhesive force between the positive electrode active material layer CAM and the positive electrode substrate PCS. The binder may include, for example, polyvinylidene fluoride, a styrene butadiene rubber (SBR), polytetrafluoroethylene, polyvinylidenefluoride, a vinylidene fluoride/hexafluoropropylene copolymer, polyacrylonitrile, and/or polymethyl methacrylate.

Based on the total 100 parts by weight of the positive electrode active material, the solid electrolyte, the conductive material, and the binder, the positive electrode active material may be included in an amount of about 70 parts by weight to about 92 parts by weight in the positive electrode active material layer CAM. Based on the total 100 parts by weight of the positive electrode active material, the solid electrolyte, the conductive material, and the binder, the binder may be included in an amount of about 0.5 parts by weight to about 1.5 parts by weight in the positive electrode active material layer CAM.

Based on the total 100 parts by weight of the solid electrolyte, the conductive material may be included in an amount of about 1 part by weight to about 50 parts by weight in the positive electrode active material layer CAM. If (e.g., when) the positive electrode active material layer CAM includes the conductive material whose amount is less than about 1 part by weight based on 100 parts by weight of the solid electrolyte, a ratio (e.g., an amount) of the conductive material may be reduced to decrease electrical conductivity of the positive electrode active material layer CAM. If (e.g., when) the positive electrode active material layer CAM includes the conductive material whose amount is greater than about 50 parts by weight based on 100 parts by weight of the solid electrolyte, a ratio (e.g., an amount) of the conductive material may be excessively increased to cause incomplete formation of a coating layer that covers a surface of the solid electrolyte.

In one or more embodiments, the positive electrode active material layer CAM may further include an additive, such as a filler, a coating agent, a dispersant, and/or an ion conductivity agent, in addition to the positive electrode active material, the solid electrolyte, the conductive material, and the binder.

The negative electrode layer NEL according to one or more embodiments of the present disclosure may include a negative electrode substrate NCS and a negative electrode coating layer AAM on the negative electrode substrate NCS. The negative electrode substrate NCS may include a negative electrode support layer NPL, and may also include a first negative electrode metal layer NEC1 and a second negative electrode metal layer NEC2 that are correspondingly provided on opposite surfaces (e.g., on two opposite surfaces) of the negative electrode support layer NPL. For example, in one or more embodiments, the negative electrode substrate NCS may be a composite substrate. In one or more embodiments, the first negative electrode metal layer NEC1 of the negative electrode substrate NCS may be in contact with the negative electrode coating layer AAM. The second negative electrode metal layer NEC2 of the negative electrode substrate NCS may be in contact with a negative electrode coating layer of an adjacent other unit cell.

Each of the first and second negative electrode metal layers NEC1 and NEC2 may provide a reference surface on which (e.g., on one of which) the negative electrode coating layer AAM is arranged and provided. Each of the first and second negative electrode metal layers NEC1 and NEC2 may include a material that does not react with lithium, for example, a material that does not form an alloy or a compound with lithium. For example, in one or more embodiments, each of the first and second negative electrode metal layers NEC1 and NEC2 may include at least one metal selected from among copper (Cu), stainless steel, titanium (Ti), iron (Fe), cobalt (Co), and nickel (Ni). In one or more embodiments, each of the first and second negative electrode metal layers NEC1 and NEC2 may have a thickness of about 1 µm to about 20 µm, about 5 µm to about 15 µm, or about 7 µm to about 10 µm.

Each of the first and second negative electrode metal layers NEC1 and NEC2 may be formed of one of the metals mentioned above, an alloy of two or more of the metals mentioned above, or a coating material. Each of the first and second negative electrode metal layers NEC1 and NEC2 may have, for example, a plate shape (e.g., be a plate) or a foil shape (e.g., be a foil).

The negative electrode support layer NPL may include a polymer film (e.g., a resilient polymer film). In one or more embodiments, the negative electrode support layer NPL may be substantially the same as or similar to the positive electrode support layer PPL discussed herein. For example, a resilient polymer film may have an elastic modulus in a range from about 0.1 GPa to about 1 GPa.

The negative electrode coating layer AAM may induce growth of lithium metal between the negative electrode coating layer AAM and the negative electrode substrate NCS if (e.g., when) the unit cell UNC is charged. The negative electrode coating layer AAM may serve as a protection layer for lithium metal and may concurrently (e.g., simultaneously) suppress or reduce precipitation and growth of lithium dendrite.

In one or more embodiments, the negative electrode coating layer AAM may include a composite of a metal and carbon. For example, in one or more embodiments, the negative electrode coating layer AAM may include at least one metal selected from among gold (Au), platinum (Pt), palladium (Pd), silicon (Si), silver (Ag), aluminum (Al), bismuth (Bi), tin (Sn), and zinc (Zn). The negative electrode coating layer AAM may include at least one carbon selected from among carbon black, acetylene black, furnace black, Ketjen black, and graphene. In one or more embodiments, the negative electrode coating layer AAM may include a composite (or mixture) of carbon black and silver (Ag).

In one or more embodiments, the negative electrode coating layer AAM may further include an additive in addition to the aforementioned metal and carbon. In one or more embodiments, the negative electrode coating layer AAM may include at least one additive selected from among, for example, a binder, a filler, a coating agent, a dispersant, and an ion conductivity agent (e.g., ion conductor).

The negative electrode coating layer AAM may have a thickness less than that of the positive electrode active material layer CAM. For example, in one or more embodiments, the negative electrode coating layer AAM may have a thickness that is equal to or less than about 50%, equal to or less than about 40%, equal to or less than about 30%, equal to or less than about 20%, equal to or less than about 10%, or equal to or less than about 5% of that of the positive electrode active material layer CAM. In one or more embodiments, the negative electrode coating layer AAM may have a thickness of, for example, about 1 µm to about 20 µm, about 2 µm to about 10 µm, or about 3 µm to about 7 µm. If (e.g., when) the negative electrode coating layer AAM has an excessively small thickness (e.g., less than about 1 µm), a lithium dendrite formed between the negative electrode coating layer AAM and the negative electrode substrate NCS may collapse the negative electrode coating layer AAM to reduce cycle characteristics of the unit cell UNC. If (e.g., when) the negative electrode coating layer AAM has an excessively large thickness (e.g., larger than about 20 µm), the unit cell UNC may have a decreased energy density and an increased internal resistance caused by the negative electrode coating layer AAM, thereby reducing cycle characteristics of the unit cell UNC. In one or more embodiments, If the negative electrode coating layer (AAM) is too thin (e.g., less than about 1 µm), lithium dendrites formed between the AAM and the negative electrode substrate (NCS) may collapse the AAM, reducing the cycle characteristics of the unit cell (UNC). Conversely, if the AAM is too thick (e.g., greater than about 20 µm), the unit cell (UNC) may experience decreased energy density and increased internal resistance, also reducing its cycle characteristics.

In one or more embodiments, the negative electrode coating layer AAM and the solid electrolyte layer SER may further have therebetween a carbon layer for improving an adhesive force. In other words, the negative electrode layer NEL may further include a carbon layer between the negative electrode coating layer AAM and the solid electrolyte layer SER for improving an adhesive force.

The solid electrolyte layer SER may be provided between the positive electrode layer PEL and the negative electrode layer NEL. In one or more embodiments, the solid electrolyte layer SER may include a sulfide-based solid electrolyte with excellent or suitable lithium-ion conductivity characteristics. The solid electrolyte in the solid electrolyte layer SER may be the same as or different from one of materials included in the solid electrolyte in the positive electrode active material layer CAM.

The solid electrolyte (e.g., in a form of particles) in the solid electrolyte layer SER may have a spherical particle shape or an oval particle shape. In one or more embodiments, the solid electrolyte may include a sulfide-based solid electrolyte. The solid electrolyte may be in an amorphous state, a crystalline state, or a mixed state of amorphous state and crystalline state. The solid electrolyte may include at least sulfur (S), phosphorus (P), and lithium (Li) among component elements included in the sulfide-based solid electrolyte mentioned herein (e.g., the solid electrolyte may include sulfur (S), phosphorus (P), and lithium (Li) as key component elements in the sulfide-based solid electrolyte described above). For example, the solid electrolyte may be a material including Li₂S-P₂S₅. If (e.g., when) a material including Li₂S-P₂S₅ is utilized as a sulfide-based solid electrolyte material of the solid electrolyte, a mixing molar ratio of Li₂S to P₂S₅ may be in a range of about 50:50 to about 90:10 (or Li₂S:P₂S₅ = 50:50 ~ 90:10).

In one or more embodiments, the sulfide-based solid electrolyte may be an argyrodite-type (kind) compound including at least one selected from among Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). In one or more embodiments, the sulfide-based solid electrolyte may be an argyrodite-type (kind) compound including at least one selected from among Li₆PS₅Cl, Li₆PS₅Br, and Li₆PS₅I.

In one or more embodiments, the solid electrolyte may include an argyrodite-type (kind) compound including Li₇₋ₐMₐPS_{6-c}X_{c}. In the foregoing chemical formula, X may be Cl, Br, or a (e.g., any suitable) combination thereof. M may be Na, K, Fe, Mg, Ca, Ag, Cu, Zr, Zn, or a (e.g., any suitable) combination thereof. In addition, a and c may each be a real number between 0 and 2.

The argyrodite-type (kind) solid electrolyte may have a density of about 1.5 g/cc to about 2.0 g/cc. As the argyrodite-type (kind) solid electrolyte has a density of equal to or greater than about 1.5 g/cc, it may decrease an internal resistance of an all-solid-state battery and prevent or reduce a solid electrolyte layer from short-circuit and penetration caused by the formation of lithium dendrite. The solid electrolyte may have an elastic modulus of, for example, about 15 GPa to about 35 GPa.

In one or more embodiments, the solid electrolyte layer SER may further include a binder. The binder included in the solid electrolyte layer SER may include a styrene-butadiene rubber (SBR), polytetrafluoroethylene, polyvinylidene fluoride, and/or polyethylene, but embodiments of the present disclosure are not limited thereto. The binder of the solid electrolyte layer SER may be the same as or similar to a binder utilized in the positive electrode active material layer CAM or a binder utilized in the negative electrode coating layer AAM.

Referring to FIG. 2, in one or more embodiments, the negative electrode layer NEL of the unit cell UNC may further include a lithium metal layer LPL between the negative electrode substrate NCS and the negative electrode coating layer AAM. The lithium metal layer LPL may have a thickness that becomes increased if (e.g., when) the unit cell UNC is charged. The negative electrode coating layer AAM may serve as a protection layer for the lithium metal layer LPL and may concurrently (e.g., simultaneously) suppress or reduce growth of lithium dendrite from the lithium metal layer LPL.

The lithium metal layer LPL may be a metal thin layer including lithium or a lithium alloy. The lithium alloy may be a Li-Al alloy, a Li-Sn alloy, a Li-In alloy, a Li-Ag alloy, a Li-Au alloy, a Li-Zn alloy, a Li-Ge alloy, or a Li-Si alloy, but any suitable lithium alloys may be utilized. In one or more embodiments, the lithium metal layer LPL may include lithium or one of the lithium alloys mentioned herein. In one or more embodiments, the lithium metal layer LPL may include many types (kinds) of lithium alloy. For example, the lithium metal layer LPL may be a thin metal layer composed of lithium or a lithium alloy. Suitable lithium alloys include Li-Al, Li-Sn, Li-In, Li-Ag, Li-Au, Li-Zn, Li-Ge, and Li-Si alloys. In one or more embodiments, the lithium metal layer LPL may be composed of lithium or any of these lithium alloys. In one or more embodiments, the lithium metal layer LPL may include various types of lithium alloys.

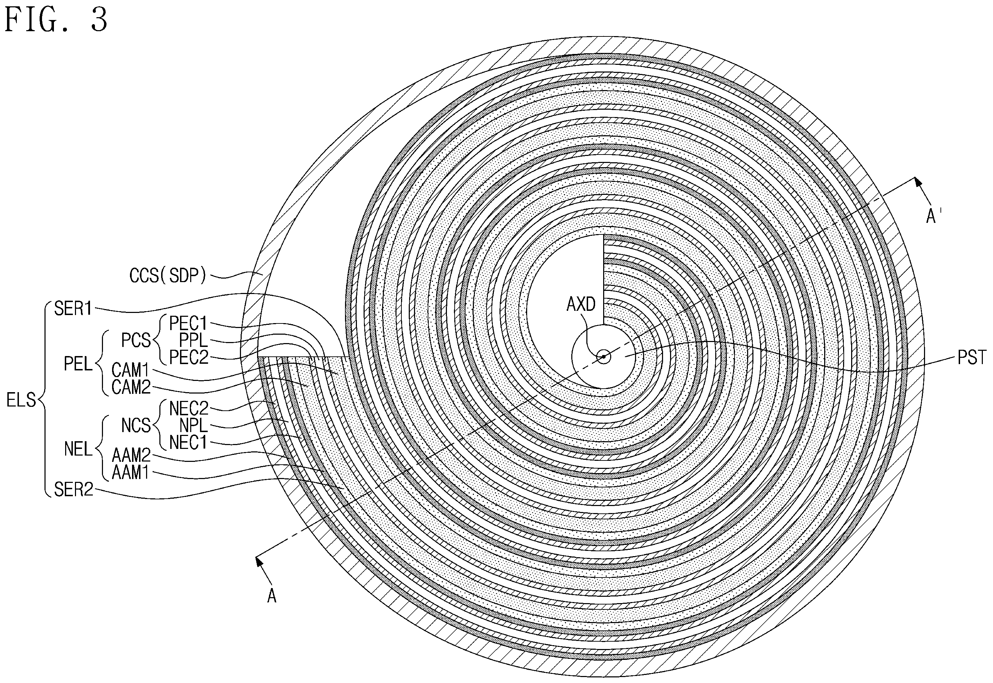

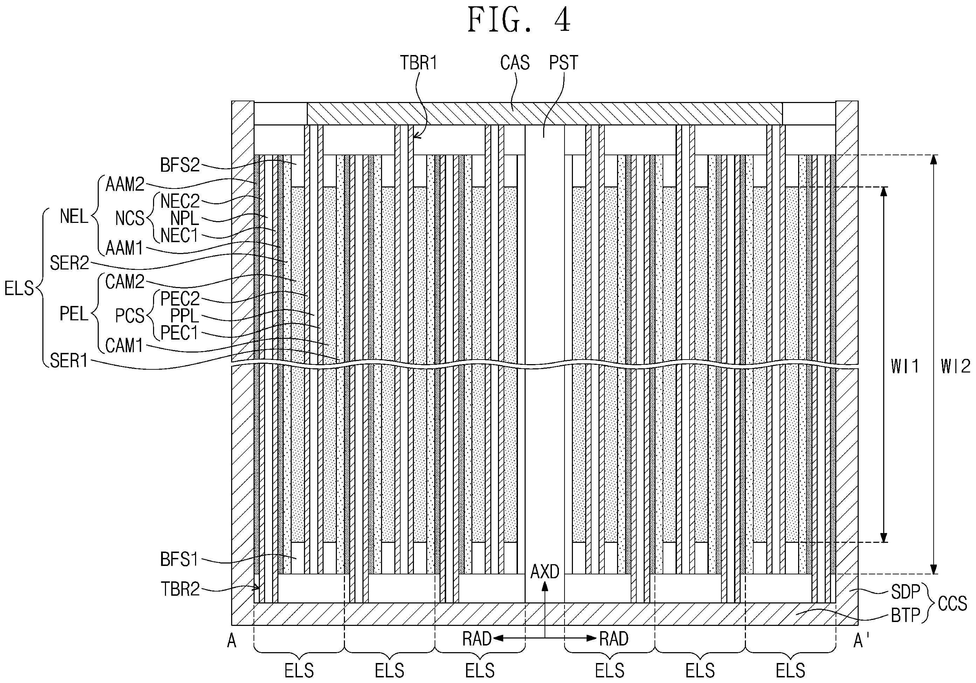

FIG. 3 illustrates a plan view showing a cylindrical all-solid-state battery according to one or more embodiments of the present disclosure. FIG. 4 illustrates a cross-sectional view of the cylindrical all-solid-state battery taken along the line A-A' of FIG. 3. Referring to FIGS. 3 and 4, a cylindrical all-solid-state battery may include a cylindrical casing CCS and a cap assembly CAS. An electrode assembly ELS may be accommodated in the cylindrical casing CCS.

The cylindrical casing CCS may include a bottom portion BTP and a side portion SDP. The bottom portion BTP may have a circular plate shape (e.g., in a form of circular plate). The side portion SDP may extend in an axial direction AXD from a circumference of the bottom portion BTP. The side portion SDP may have a hollow cylindrical shape. During the fabrication of the all-solid-state battery, an upper portion of the cylindrical casing CCS may be in an open state. The electrode assembly ELS may be inserted through the opened upper portion into the cylindrical casing CCS. As the cap assembly CAS covers or closes the opened upper portion of the cylindrical casing CCS, an inner space of the cylindrical casing CCS may be sealed hermetically.

The cylindrical casing CCS may include at least one metal selected from among steels, nickel-plated steels, stainless steels, aluminum, and aluminum alloys.

The electrode assembly ELS may include a first solid electrolyte layer SER1, a positive electrode layer PEL, a second solid electrolyte layer SER2, and a negative electrode layer NEL. The first solid electrolyte layer SER1, the positive electrode layer PEL, the second solid electrolyte layer SER2, and the negative electrode layer NEL may be sequentially provided along a radial direction RAD (e.g., in the stated order).

In the present embodiment, an axial direction AXD may correspond to an axial direction of the electrode assembly ELS shaped like a cylinder. The radial direction RAD may be a direction normal or perpendicular to the axial direction AXD. The radial direction RAD may correspond to a radial direction of the cylindrical electrode assembly ELS.

The positive electrode layer PEL of the electrode assembly ELS may include a first positive electrode active material layer CAM1, a second positive electrode active material layer CAM2, and a positive electrode substrate PCS between the first positive electrode active material layer CAM1 and the second positive electrode active material layer CAM2. The first positive electrode active material layer CAM1 may be provided on a first positive electrode metal layer PEC1 of the positive electrode substrate PCS. The second positive electrode active material layer CAM2 may be provided on a second positive electrode metal layer PEC2 of the positive electrode substrate PCS. The first positive electrode active material layer CAM1 may be in contact with the first solid electrolyte layer SER1. The second positive electrode active material layer CAM2 may be in contact with the second solid electrolyte layer SER2.

The negative electrode layer NEL of the electrode assembly ELS may include a first negative electrode coating layer AAM1, a second negative electrode coating layer AAM2, and a negative electrode substrate NCS between the first negative electrode coating layer AAM1 and the second negative electrode coating layer AAM2. The first negative electrode coating layer AAM1 may be provided on a first negative electrode metal layer NEC1 of the negative electrode substrate NCS. The second negative electrode coating layer AAM2 may be provided on a second negative electrode metal layer NEC2 of the negative electrode substrate NCS. The first negative electrode coating layer AAM1 may be in contact with the second solid electrolyte layer SER2. The second negative electrode coating layer AAM2 may be in contact with the first solid electrolyte layer SER1 adjacent in the radial direction RAD to the second negative electrode coating layer AAM2.

A description of each of the first and second positive electrode active material layers CAM1 and CAM2 may be substantially the same as that of the positive electrode active material layer CAM discussed with reference to FIG. 1. A description of each of the first and second negative electrode coating layers AAM1 and AAM2 may be substantially the same as that of the negative electrode coating layer AAM discussed with reference to FIG. 1. A description of each of the positive electrode substrate PCS and the negative electrode substrate NCS may be substantially the same as that of the positive electrode substrate PCS and the negative electrode substrate NCS, respectively, discussed with reference to FIG. 1. A description of each of the first and second solid electrolyte layers SER1 and SER2 may be the same as that of the solid electrolyte layer SER discussed with reference to FIG. 1.

According to one or more embodiments, a first width WI1 in the axial direction AXD of each of the first and second positive electrode active material layers CAM1 and CAM2 may be less than a second width WI2 in the axial direction AXD of each of the first and second solid electrolyte layers SER1 and SER2. A first buffer structure BFS1 and a second buffer structure BFS2 may be provided to alleviate step differences between the positive electrode active material layers CAM1 and CAM2 and the first and second solid electrolyte layers SER1 and SER2. In one or more embodiments, a sum of the first width WI1, a width of the first buffer structure BFS1, and a width of the second buffer structure BFS2 is substantially the same as the second width WI2.

The first and second buffer structures BFS1 and BFS2 may be arranged correspondingly adjacent to opposite sides of the first positive electrode active material layer CAM1. The first and second buffer structures BFS1 and BFS2 may each be interposed between the first solid electrolyte layer SER1 and the first positive electrode metal layer PEC1 of the positive electrode substrate PCS.

The first and second buffer structures BFS1 and BFS2 may be arranged correspondingly adjacent to opposite sides of the second positive electrode active material layer CAM2. The first and second buffer structures BFS1 and BFS2 may each be interposed between the second solid electrolyte layer SER2 and the second positive electrode metal layer PEC2 of the positive electrode substrate PCS.

The first and second buffer structures BFS1 and BFS2 may each independently include at least one polymer selected from among polyimide, polyester, polypropylene, polyamide, polystyrene, polyvinyl chloride, and polycarbonate. The first and second buffer structures BFS1 and BFS2 may structurally compensate relatively small first widths WI1 of the positive electrode active material layers CAM1 and CAM2, thereby improving stability of an electrode plate.

The electrode assembly ELS may be wound in a circumferential direction around the axial direction AXD. Thus, the electrode assembly ELS may have a cylindrical shape. As the electrode assembly ELS is wound in a cylindrical shape, the first solid electrolyte layer SER1, the positive electrode layer PEL, the second solid electrolyte layer SER2, and the negative electrode layer NEL may be repeated along the radial direction RAD.

As discussed with reference to FIGS. 1 and 2, the positive electrode substrate PCS may include a positive electrode support layer PPL, and the negative electrode substrate NCS may include a negative electrode support layer NPL. Each of the positive electrode support layers PPL and the negative electrode support layer NPL may include an elastic film (e.g., resilient polymer film).

The positive electrode support layer PPL and the negative electrode support layer NPL may be each configured to reduce a change in volume of the electrode assembly ELS during charge and discharge of battery. As discussed with reference to

FIG. 2, an increase in state-of-charge(SOC) of the electrode assembly ELS may cause growth of the lithium metal layer LPL in the negative electrode layer NEL. For example, the increase in SOC of the electrode assembly ELS may induce an increase in volume of the electrode assembly ELS. Because the cylindrical casing CCS may have a fixed internal volume, the positive electrode support layer PPL and the negative electrode support layer NPL may receive the increase in volume of the electrode assembly ELS to maintain the all-solid-state battery in a stable state. In addition, the positive electrode support layer PPL and the negative electrode support layer NPL may allow the electrode assembly ELS to have an internal pressure maintained at a constant level.

In one or more embodiments of the present disclosure, the positive electrode support layer PPL and the negative electrode support layer NPL may have substantially the same thickness. In one or more embodiments of the present disclosure, the negative electrode support layer NPL may have a thickness greater than that of the positive electrode support layer PPL. As the negative electrode support layer NPL is adjacent to the lithium metal layer (see LPL of FIG. 2) grown in the negative electrode layer NEL, the negative electrode support layer NPL may serve to effectively buffer a change in volume of the electrode assembly ELS.

In one or more embodiments of the present disclosure, the positive electrode support layer PPL may not be provided. If (e.g., when) the positive electrode support layer PPL is not provided, the positive electrode substrate PCS may be configured to include one positive electrode metal layer.

The positive electrode substrate PCS of the electrode assembly ELS may include a first tab region TBR1. The negative electrode substrate NCS of the electrode assembly ELS may include a second tab region TBR2. In one or more embodiments, the first tab region TBR1 may be electrically connected to the cap assembly CAS, while protruding upward toward the cap assembly CAS. The second tab region TBR2 may be electrically connected to the bottom portion BTP of the cylindrical casing CCS, while protruding downward toward the bottom portion BTP.

In one or more embodiments of the present disclosure, a pin structure PST may be provided on a center of the electrode assembly ELS. The pin structure PST may have a cylindrical shape and extend along the axial direction AXD. For example, in one or more embodiments, the pin structure PST may include a resilient material the same as or similar to that of the positive electrode support layer PPL and that of the negative electrode support layer NPL. Similar to the positive electrode support layer PPL and the negative electrode support layer NPL, the pin structure PST may be configured to receive or buffer a change in volume of the electrode assembly ELS.

In one or more embodiments of the present disclosure, the pin structure PST may not be provided.

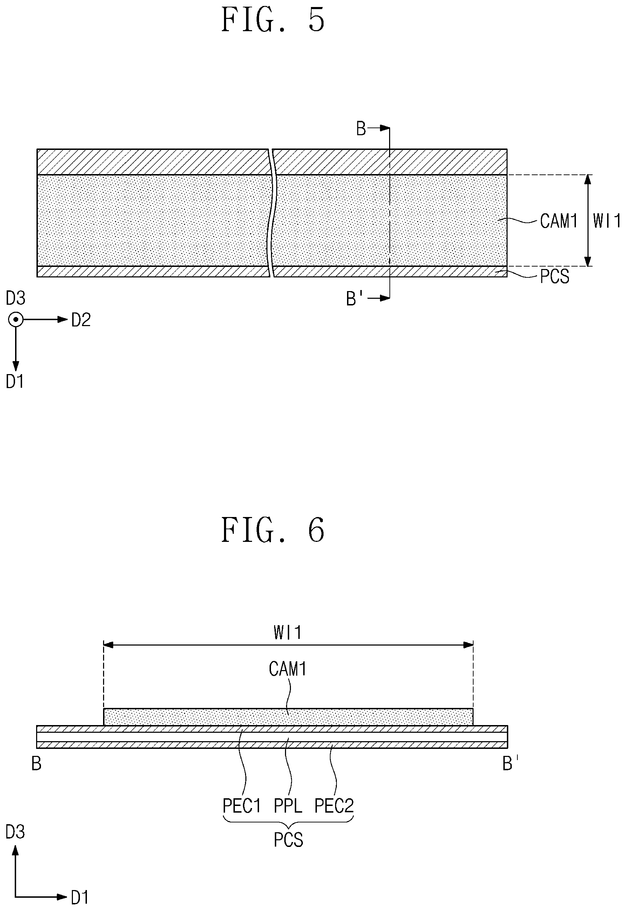

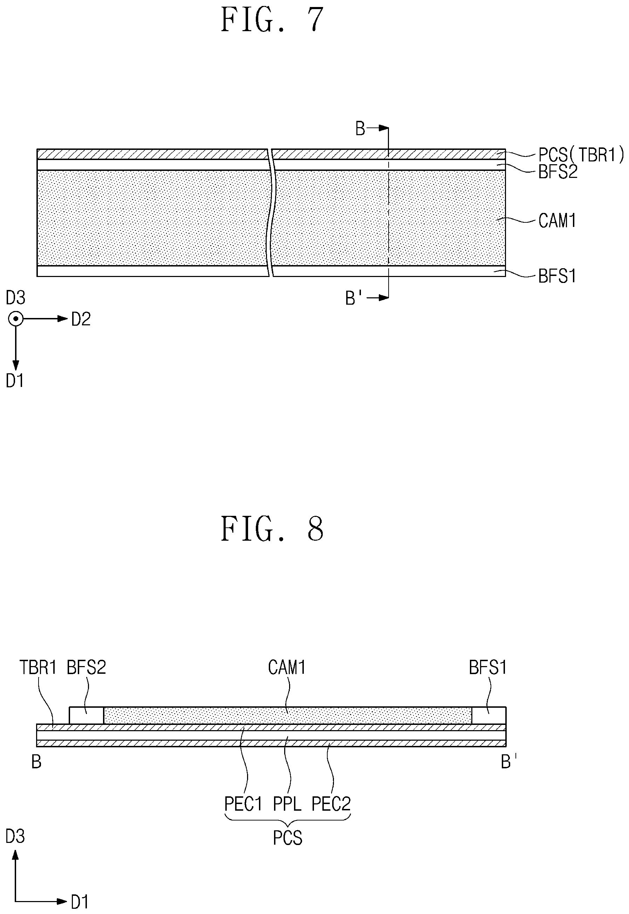

FIGS. 5 to 9 illustrate diagrams showing a method of fabricating an all-solid-state battery according to one or more embodiments of the present disclosure. FIG. 6 illustrates a cross-sectional view taken along the line B-B' of FIG. 5. FIG. 8 illustrates a cross-sectional view taken along the line B-B' of FIG. 7.

Referring to FIGS. 5 and 6, a positive electrode substrate PCS may be provided. The positive electrode substrate PCS may have a sheet shape that extends in a second direction D2. The positive electrode substrate PCS may include a positive electrode support layer PPL, and may also include a first positive electrode metal layer PEC1 and a second positive electrode metal layer PEC2 that are correspondingly provided on opposite surfaces (e.g., on two opposite surfaces) of the positive electrode support layer PPL. The formation of the positive electrode substrate PCS may include plating (or depositing) a metal on opposite surfaces (e.g., on two opposite surfaces) of the positive electrode support layer PPL.

A first positive electrode active material layer CAM1 may be formed and provided on the first positive electrode metal layer PEC1 of the positive electrode substrate PCS. The formation of the first positive electrode active material layer CAM1 may include coating a positive electrode slurry on the first positive electrode metal layer PEC1 of the positive electrode substrate PCS, and drying the coated slurry. The first positive electrode active material layer CAM1 may be formed to have a first width WI1. The first width WI1 may be less than a width of the positive electrode substrate PCS.

Referring to FIGS. 7 and 8, a first buffer structure BFS1 and a second buffer structure BFS2 may each be formed on the first positive electrode metal layer PEC1 of the positive electrode substrate PCS, where the first positive electrode metal layer PEC1 is exposed by the first positive electrode active material layer CAM1. The formation of the first and second buffer structures BFS1 and BFS2 may include coating a polymer on the exposed first positive electrode metal layer PEC1 of the positive electrode substrate PCS, and drying the coated polymer.

The first buffer structure BFS1 may be formed and provided adjacent to a first lateral surface of the first positive electrode active material layer CAM1. The first buffer structure BFS1 may completely cover a surface of the first positive electrode metal layer PEC1 of the positive electrode substrate PCS, which surface of the first positive electrode metal layer PEC1 is exposed adjacent to the first lateral surface.

The second buffer structure BFS2 may be formed and provided adjacent to a second lateral surface of the first positive electrode active material layer CAM1. The second buffer structure BFS2 may partially cover a surface of the first positive electrode metal layer PEC1 of the positive electrode substrate PCS, which surface of the first positive electrode metal layer PEC1 is exposed adjacent to the second lateral surface. The first tab region TBR1 of the positive electrode substrate PCS may be exposed without being covered with the second buffer structure BFS2.

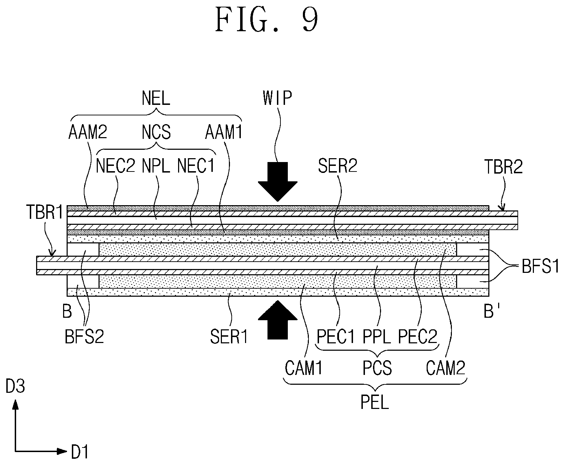

Referring to FIG. 9, a second positive electrode active material layer CAM2, a first buffer structure BFS1, and a second buffer structure BFS2 may be formed and provided on the second positive electrode metal layer PEC2 of the positive electrode substrate PCS.

A first negative electrode coating layer AAM1 may be formed and provided on a first negative electrode metal layer NEC1 of a negative electrode substrate NCS. A second negative electrode coating layer AAM2 may be formed and provided on a second negative electrode metal layer NEC2 of the negative electrode substrate NCS.

A first solid electrolyte layer SER1, a positive electrode layer PEL, a second solid electrolyte layer SER2, and a negative electrode layer NEL may be sequentially stacked (e.g., in the stated order), and a lamination process may be performed to form an electrode assembly ELS. A pressing process WIP may be performed on the electrode assembly ELS. For example, the pressing process WIP on the electrode assembly ELS may include a warm isostatic press.

The electrode assembly ELS may be wound to form the electrode assembly ELS shaped like a cylinder as discussed with reference to FIGS. 3 and 4. The cylindrically wound electrode assembly ELS may be inserted into a cylindrical casing CCS, thereby fabricating a cylindrical all-solid-state battery according to the present disclosure.

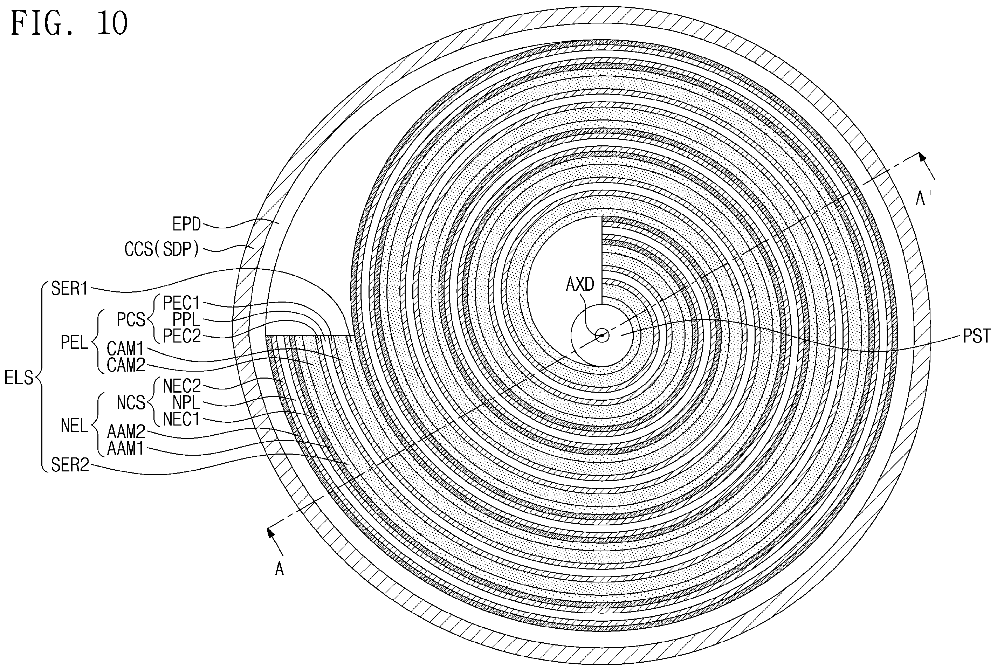

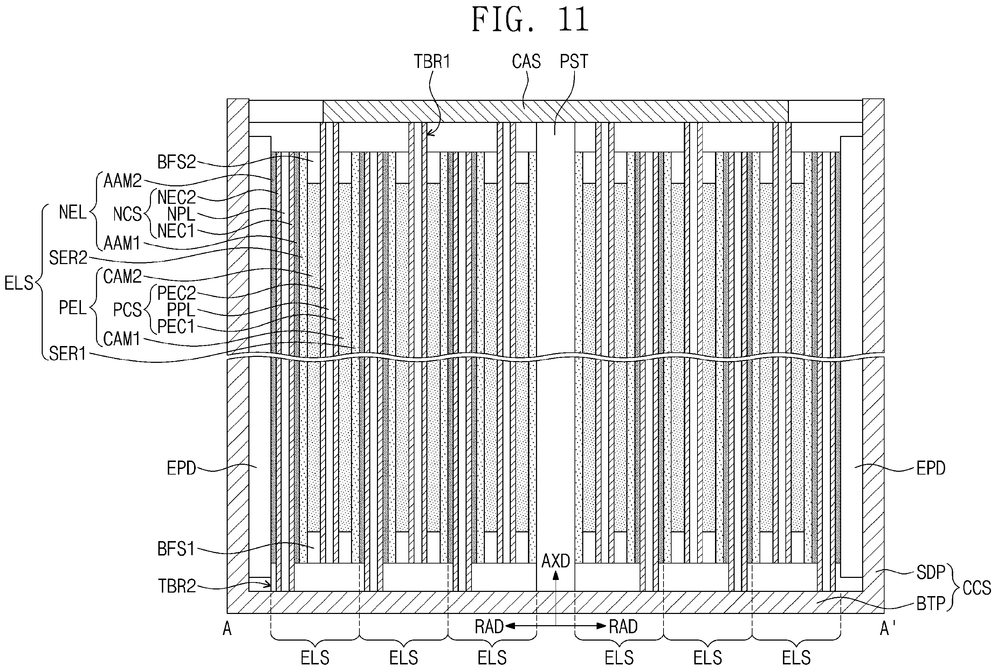

FIG. 10 illustrates a plan view showing a cylindrical all-solid-state battery according to one or more embodiments of the present disclosure. FIG. 11 illustrates a cross-sectional view of the cylindrical all-solid-state battery taken along the line A-A' of FIG. 10. In the embodiment that follows, a detailed description of technical features repetitive to those discussed with reference to FIGS. 3 and 4 will not be provided, and a difference thereof will be discussed in more detail.

Referring to FIGS. 10 and 11, in one or more embodiments, an elastic pad EPD may be provided to wrap a circumference of the electrode assembly ELS. The elastic pad EPD may be interposed between the cylindrical casing CCS and the electrode assembly ELS. The elastic pad EPD may have a cylindrical shape whose top and bottom portions are opened. The elastic pad EPD may be in direct contact with the side portion SDP of the cylindrical casing CCS. The elastic pad EPD may cover an inner sidewall of the side portion SDP.

The elastic pad EPD may include a dielectric material. The elastic pad EPD may include a resilient material. For example, in one or more embodiments, the elastic pad EPD may include at least one selected from among an epoxy resin, an acrylic resin, a polyimide resin, a polyester resin, a polypropylene resin, a polyamide resin, a polystyrene resin, a polyvinyl chloride resin, a polycarbonate resin, a fluororesin such as polytetrafluoroethylene (PTFE), and a silicone rubber.

The elastic pad EPD may be configured to reduce a change in volume of the electrode assembly ELS during charge and discharge of battery. An increase in SOC of the electrode assembly ELS may cause growth of the lithium metal layer LPL in the negative electrode layer NEL. The cylindrical casing CCS may have a fixed internal volume. The elastic pad EPD may receive at least a portion of the increase in volume of the electrode assembly ELS to maintain a stable state of the all-solid-state battery. In addition, the elastic pad EPD may allow the electrode assembly ELS to have an internal pressure maintained at a constant level.

One or more embodiments of the present disclosure may provide a cylindrical all-solid-state battery that may effectively buffer expansion of an electrode assembly. In the all-solid-state battery of the present disclosure, a pressing structure capable of pressing the electrode assembly may be minimized or reduced to increase an energy density of the battery. One or more embodiments of the present disclosure may provide an all-solid-state battery including an electrode plate with improved stability.

In the present disclosure, expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

In the context of the present disclosure and unless otherwise defined, the terms "use," "using," and "used" may be considered synonymous with the terms "utilize," "utilizing," and "utilized," respectively.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, or 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery manufacturing device, a battery management system (BMS), and/or any other relevant devices or components according to embodiments of the present invention described herein may be implemented further utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While this disclosure has been described in connection with what is presently considered to be practical embodiments, it is to be understood that the present disclosure is not limited to the disclosed embodiments and is intended to cover various modifications and equivalent arrangements included within the spirit and scope of the appended claims and equivalents thereof, and therefore the aforementioned embodiments should be understood to be mere examples but not limiting this disclosure in any way.

### List of reference signs:

- UNC: unit cell
- PEL: positive electrode layer
- NEL: negative electrode layer
- SER: solid electrolyte layer
- PCS: positive electrode substrate
- CAM: positive electrode active material layer
- PPL: positive electrode support layer
- PEC1: first positive electrode metal layer
- PEC2: second positive electrode metal layer
- NCS: negative electrode substrate
- AAM: negative electrode coating layer
- NPL: negative electrode support layer
- NEC1: first negative electrode metal layer
- NEC2: second negative electrode metal layer
- LPL: lithium metal layer
- CCS: cylindrical casing
- CAS: cap assembly
- ELS: electrode assembly
- SER1: first solid electrolyte layer
- SER2: second solid electrolyte layer
- RAD: radial direction
- AXC: axial direction
- CAM1: first positive electrode active material layer
- CAM2: second positive electrode active material layer
- AAM1: first negative electrode coating layer
- AAM2: second negative electrode coating layer
- BFS1: first buffer structure
- BFS2: second buffer structure
- TBR1: first tab region
- TBR2: second tab region
- EPD: elastic pad

## Claims

1. A cylindrically wound electrode assembly (ELS), comprising:
a first solid electrolyte layer (SER1);
a positive electrode layer (PEL);
a second solid electrolyte layer (SER2); and
a negative electrode layer (NEL),
wherein the first solid electrolyte layer (SER1), the positive electrode layer (PEL), the second solid electrolyte layer (SER2), and the negative electrode layer (NEL) are arranged sequentially along a radial direction (RAD) of the cylindrically wound electrode assembly (ELS),
wherein the negative electrode layer (NEL) comprises:
a negative electrode substrate (NCS); and
a first negative electrode coating layer (AAM1) between the negative electrode substrate (NCS) and the second solid electrolyte layer (SER2),
wherein the negative electrode substrate (NCS) comprises:
a negative electrode support layer (NPL);
a first negative electrode metal layer (NEC1) on a first surface of the negative electrode support layer (NPL); and
a second negative electrode metal layer (NEC2) on a second surface of the negative electrode support layer (NPL), and
wherein the negative electrode support layer (NPL) comprises a resilient polymer film.

2. The cylindrically wound electrode assembly (ELS) as claimed in claim 1, wherein the negative electrode support layer (NPL) is configured to buffer a change in volume of the cylindrically wound electrode assembly (ELS).

3. The cylindrically wound electrode assembly (ELS) according to any of the previous claims, wherein the first negative electrode coating layer (AAM1) comprises a composite of carbon and at least one metal selected from the group consisting of gold, platinum, palladium, silicon, silver, aluminum, bismuth, tin, and zinc.

4. The cylindrically wound electrode assembly (ELS) according to any of the previous claims, wherein the negative electrode layer (NEL) further comprises a second negative electrode coating layer (AAM2) between the negative electrode substrate (NCS) and the first solid electrolyte layer (SER1) that is wound adjacent thereto.

5. The cylindrically wound electrode assembly (ELS) as claimed in claim 4, wherein
the first negative electrode coating layer (AAM1) is between the first negative electrode metal layer (NEC1) and the second solid electrolyte layer (SER2), and
the second negative electrode coating layer (AAM2) is between the second negative electrode metal layer (NEC2) and the first solid electrolyte layer (SER1) that is wound adjacent thereto.

6. The cylindrically wound electrode assembly (ELS) according to any of the previous claims, wherein the positive electrode layer (PEL) comprises:
a positive electrode substrate (PCS);
a first positive electrode active material layer (CAM1) between the positive electrode substrate (PCS) and the first solid electrolyte layer (SER1); and
a second positive electrode active material layer (CAM2) between the positive electrode substrate (PCS) and the second solid electrolyte layer (SER2),
wherein the positive electrode substrate (PCS) comprises:
a positive electrode support layer (PPL);
a first positive electrode metal layer (PEC1) on a first surface of the positive electrode support layer (PPL); and
a second positive electrode metal layer (PEC2) on a second surface of the positive electrode support layer (PPL), and
wherein the positive electrode support layer (PPL) comprises a resilient polymer film.

7. The cylindrically wound electrode assembly (ELS) as claimed in claim 6, wherein a thickness of the negative electrode support layer (NPL) is greater than a thickness of the positive electrode support layer (PPL).

8. The cylindrically wound electrode assembly (ELS) as claimed in claim 6 or 7, wherein the positive electrode layer (PEL) further comprises:
a first buffer structure (BFS1) on a first step difference between the first solid electrolyte layer (SER1) and a first side of the first positive electrode active material layer (CAM1); and
a second buffer structure (BFS2) on a second step difference between the first solid electrolyte layer (SER1) and a second side of the first positive electrode active material layer (CAM1).

9. The cylindrically wound electrode assembly (ELS) as claimed according to any of claims 6 to 8, wherein the positive electrode layer (PEL) further comprises:
a third buffer structure on a third step difference between the second solid electrolyte layer (SER2) and a first side of the second positive electrode active material layer (CAM2); and
a fourth buffer structure on a fourth step difference between the second solid electrolyte layer (SER2) and a second side of the second positive electrode active material layer (CAM2).

10. The cylindrically wound electrode assembly (ESL) as claimed in claim 8, wherein each of the first buffer structure (BFS1) and the second buffer structure (BFS2) comprises a polymer layer coated on the first positive electrode metal layer (PEC1).

11. A cylindrical all-solid-state battery, comprising:
a cylindrically wound electrode assembly;
a cylindrical casing (CCS) that accommodates the cylindrically wound electrode assembly (ELS); and
a cap assembly (CAS) that closes an opened upper portion of the cylindrical casing (CCS),
wherein the cylindrically wound electrode assembly (ELS) is configured according to any of the previous claims 1 to 10, and/or wherein the cylindrically sound electrode assembly (ELS) comprises:
a positive electrode layer (PEL);
a negative electrode layer (NEL); and
a solid electrolyte layer (SER) between the positive electrode layer (PEL) and the negative electrode layer (NEL),
wherein the positive electrode layer (PEL) and/or the negative electrode layer (NEL) comprises a composite substrate (PCS, NCS),
wherein the composite substrate (PCS, NCS) comprises:
a support layer (PPL, NPL); and
a metal layer (PEC1, PEC2, NEC1, NEC2) on a surface of the support layer (PPL, NPL), and
wherein the support layer (PPL, NPL) comprises a resilient polymer film.

12. The cylindrical all-solid-state battery as claimed in claim 11, wherein the support layer (PPL, NPL) is configured to buffer a change in volume of the cylindrically wound electrode assembly (ELS).

13. The cylindrical all-solid-state battery as claimed in claim 11 or 12, further comprising an elastic pad (EPD) between the cylindrically wound electrode assembly (ELS) and the cylindrical casing (CCS).

14. The cylindrical all-solid-state battery as claimed according to any of claims 11 to 13, wherein the positive electrode layer (PEL) comprises:
a positive electrode active material layer (CAM) in contact with the solid electrolyte layer (SER), a first width (WI1) in an axial direction (AXC) of the positive electrode active material layer (CAM) being less than a second width (WI2) in the axial direction (AXC) of the solid electrolyte layer (SER);
a first buffer structure (BFS1) adjacent to a first side of the positive electrode active material layer (CAM); and
a second buffer structure (BFS2) adjacent to a second side of the positive electrode active material layer (CAM).

15. The cylindrical all-solid-state battery as claimed in claim 14, wherein
the first buffer structure (BFS1) is on a first step difference between the solid electrolyte layer (SER) and the first side of the positive electrode active material layer (CAM), and
the second buffer structure (BFS2) is on a second step difference between the solid electrolyte layer (SER) and the second side of the positive electrode active material layer (CAM).
